# EUROPÄISCHE PATENTANMELDUNG

(11) **EP 1 384 639 A1**
(43) Veröffentlichungstag der Anmeldung: **28.01.2004**
(21) Anmeldenummer: 03013704.6
(22) Anmeldetag: 17.06.2003
(51) Int. Cl.: B61D 47/00, B65G 63/02

(54) **Verladesystem und Ladewagen für ein Verladesystem**

(30) Priorität: 19.06.2002 DE 10227263
(71) Anmelder: UTC Uebach Technologie Consulting GmbH, 57572 Niederfischbach (DE)
(72) Erfinder: Uebach, Eckhard, 57258 Freudenberg-Heisberg (DE); Krämer, Walter, 67149 Meckenheim (DE); Hopf, Ernst- Roland, 83308 Trostberg (DE)
(74) Vertreter: Dreiss, Fuhlendorf, Steimle & Becker

(57) **Zusammenfassung**

Die vorliegende Erfindung betrifft einen Ladewagen (1), insbesondere zum Verladen einer Ladung (2) von einer Bereitstellungszone (3) zu einer Zielzone (4) und ein Verladesystem (20).

Der Ladewagen (1) ist entlang einer Fahrtrichtung (5a) hinund her verfahrbar und weist mindestens ein in einer quer zur Fahrtrichtung (5a) liegenden Laderichtung (5b) aus- und einfahrbares Verlademittel (6) auf, wobei das Verlademittel (6) eine anhebbare und absenkbare Tragfläche (7a) aufweist, mit der das Verlademittel (6) unter Stützflächen (2a) der Ladung (2) verfahrbar ist.

## Beschreibung

Die vorliegende Erfindung betrifft einen Ladewagen, insbesondere zum Verladen einer Ladung von einer Bereitstellungszone zu einer Zielzone, wobei der Ladewagen entlang einer Fahrtrichtung hin- und her verfahrbar ist und mindestens ein in einer quer zur Fahrtrichtung liegenden Laderichtung aus- und einfahrbares Verlademittel aufweist, und wobei das Verlademittel eine anhebbare und absenkbare Tragfläche aufweist, mit der das Verlademittel unter Stützflächen der Ladung verfahrbar ist.

Ferner betrifft die vorliegende Erfindung ein Verladesystem zum Verladen einer Ladung von einer Bereitstellungszone zu einer Zielzone.

Herkömmliche Verladesysteme, z.B. zum Verladen von Gütern in Eisenbahnwaggons, erfordern eine Beladung der Eisenbahnwaggons mit Gabelstaplern oder anderen durch Bedienpersonen gesteuerte Ladewagen, die sehr zeitaufwendig ist. Darüber hinaus treten beim Verladen mechanische Belastungen durch Vibrationen und dergleichen auf, die insbesondere bei komplexen Formteilen und ähnlicher Ladung zu Schäden führen können.

Bei einem weiteren, bereits vorgeschlagenen Verladesystem ist die Positioniergenauigkeit insbesondere bei hohen Ladungsgewichten unzureichend, so dass systembedingte Toleranzen wie z.B. ein Höhenunterschied zwischen dem Waggonboden und einer Laderampe nicht immer korrekt ausgeglichen werden können.

Demgemäß ist es Aufgabe der vorliegenden Erfindung, ein verbessertes Verladesystem und einen verbesserten Ladewagen für ein Verladesystem bereitzustellen, um eine flexiblere und schonendere Handhabung der Ladung bei gleichzeitiger Verkürzung der Verladezeiten zu ermöglichen.

Diese Aufgabe wird bei einem Ladewagen der eingangs genannten Art dadurch gelöst, dass das Verlademittel einen auf Rollen gelagerten Träger aufweist.

Das Verlademittel wird bei ganz oder zumindest teilweise abgesenkter Tragfläche auf seinen Rollen direkt unter die anzuhebende Ladung verfahren, die hierzu entsprechende Aussparungen für das Verlademittel aufweist, wobei sich die Tragfläche über den Träger auf den Rollen und damit auf dem Boden abstützt.

Wenn das Verlademittel unter der anzuhebenden Ladung positioniert ist, wird die Tragfläche angehoben, die dabei die Ladung an ihren Stützflächen hochhebt.

Wenn von "Stützflächen der Ladung" die Rede ist, so soll dieser Begriff auch Stützflächen umfassen, die nicht an einem zu ladenden Gegenstand (z.B. einem Kraftfahrzeug) selbst vorgesehen sind, sondern auch solche, die an einem Ladebehälter wie z.B. einem Container oder einem anderen Ladehilfsmittel (z.B. Palette) vorgesehen sind.

Durch das Abstützen des Verlademittels auf dem Boden im Bereich unter den Stützflächen der Ladung wird im Gegensatz z.B. zu einem Gabelstapler verhindert, dass der Ladewagen ein durch die Ladung hervorgerufenes Drehmoment aufnehmen muss. Daher kann das Verlademittel im Vergleich zu den Gabeln eines Gabelstaplers relativ lang ausgebildet sein, ohne dass der Ladewagen instabil wird.

Eine weitere sehr vorteilhafte Ausführungsform des erfindungsgemäßen Ladewagens ist dadurch gekennzeichnet, dass zwischen einer Oberseite des Trägers und einem mit seiner Grundseite die Tragfläche bildenden, nach unten offenen U-Profil, ein druckluftbeaufschlagbarer Schlauch zur Höhenverstellung der Tragfläche vorgesehen ist.

Das Aufblasen mit Druckluft bewirkt eine Volumenänderung des Schlauchs, der sich mit seiner Unterseite auf dem Träger des Verlademittels abstützt und dessen Oberseite sich unterhalb des U-Profils befindet. Je nach der Geometrie des Schlauchs und der ihn umgebenden Bereiche des Verlademittels ist durch das Aufblasen des Schlauchs eine Höhenänderung von bis zu 60mm zwischen abgesenktem und ganz angehobenem Zustand der Tragfläche erzielbar.

Die Verwendung des druckluftbeaufschlagbaren Schlauchs ermöglicht bei einem hohem Füllstrom der Druckluft ein schnelles und - im Gegensatz zu einer herkömmlichen, ungedämpften formschlüssigen Verbindung zwischen Hebemechanismus und Ladung - zugleich ein vibrationsarmes Anheben der Tragfläche bzw. der darauf ruhenden Ladung, da der aufgeblasene Schlauch schwingungsdämpfend wirkt.

Bei einer weiteren vorteilhaften Ausführungsform der Erfindung ist die Stabilität des im Verlademittel enthaltenen Hebemechanismus dadurch weiter erhöht, dass zwischen dem Schlauch und dem U-Profil eine in Seitenwänden des Trägers geführte Zwischenplatte vorgesehen ist, auf der vorzugsweise die Schenkel des U-Profils ruhen.

Noch eine weitere Steigerung der Stabilität ist dadurch erreichbar, dass der Schlauch zumindest teilweise mit der Oberseite des ihn tragenden Trägers verklebt wird.

Gemäß einer ebenfalls sehr vorteilhaften Ausführungsform der Erfindung ist/sind vorzugsweise in dem Träger ein Druckluftanschluß und/oder eine Entlüftungsvorrichtung zur Versorgung des Schlauchs mit Druckluft bzw. zu dessen Entlüftung vorgesehen. Dies ist besonders zweckmäßig, da der Anschluss der Druckluftzufuhr bzw. der Entlüftungsvorrichtung dann sehr einfach auf der Unterseite des Schlauchs erfolgen kann, die sich im Gegensatz zur Schlauchoberseite nicht relativ zu den den Schlauch umgebenden Bereichen des Verlademittels wie z.B. den Seitenwänden oder der Zwischenplatte bzw. dem U-Profil bewegt.

Um die Verladezeit weiter zu verkürzen, ist es beim Absenken der Tragfläche bzw. Ladung möglich, die Druckluft aus dem Schlauch des Verlademittels nicht einfach über ein Ventil unter Einwirkung der Gewichtskraft der Ladung entweichen zu lassen, sondern die Entlüftungsvorrichtung so auszulegen, dass sie zum Entlüften des Schlauchs einen Unterdruck erzeugt und an den Schlauch anlegt. Auf diese Weise ist das Entlüften des Schlauchs und damit das Absenken der Tragfläche bzw. Ladung in noch kürzerer Zeit möglich, als es allein unter Einwirken der Gewichtskraft der Ladung möglich wäre.

Darüber hinaus kann mit einer solchen Entlüftungsvorrichtung die Dauer des Absenkvorgangs für verschiedene Arten von Ladung mit stark unterschiedlichem Gewicht konstant gehalten werden, um eine bessere Kalkulierbarkeit von Prozessabläufen zu ermöglichen. Hierzu ist z.B. bei einer Ladung mit geringem Gewicht eine aktive Evakuierung des Schlauchs zum Absenken zu wählen, wohingegen bei einer Ladung mit hohem Gewicht das Eigengewicht der Ladung ausreicht, um die angestrebte Maximaldauer für den Absenkvorgang nicht zu überschreiten.

Gemäß einer anderen Ausführungsform der Erfindung ist vorgesehen, dass das Verlademittel elektromechanische und/oder pneumatische und/oder hydraulische Mittel zur Höhenverstellung der Tragfläche aufweist. Hierbei kommen beispielsweise elektromotorisch angetriebene Spindelhubgetriebe, pneumatische oder hydraulische Zylinder oder dergleichen in Betracht.

Ganz besonders vorteilhaft und universell einsetzbar ist eine Variante des erfindungsgemäßen Ladewagens, bei der das Verlademittel mindestens zwei entlang der Laderichtung mittels Federelementen und/oder anderen mechanischen Verbindungen gelenkig miteinander verbundene Segmente aufweist.

Der Vorteil bei einem wie vorstehend beschrieben aus mehreren Segmenten bestehenden Verlademittel besteht darin, dass sich das Verlademittel beim Verfahren in Laderichtung wie z.B. beim Verfahren von einer Rollfläche des Ladewagens in einen Eisenbahnwaggon hinein, an eine eventuell vorhandene Krümmung des Waggonbodens anpassen kann.

Die Anpassung erfolgt durch eine elastische Verformung der Federelemente zwischen den jeweiligen Segmenten des Verlademittels, wobei die sich in Laderichtung erstreckenden Längsachsen der Segmente entsprechend der jeweiligen Krümmung des Bodens Winkel von bis zu mehreren Grad einschließen.

Sehr vorteilhaft ist es, die Federelemente als Blattfedern, insbesondere Blattfedern aus Federstahl, auszubilden, die beispielsweise die Tragflächen benachbarter Segmente des Verlademittels miteinander verbinden. Zusätzlich oder auch alternativ zu den Federelementen können benachbarte Segmente über separate Gelenke miteinander verbunden sein, die beim Verfahren des Verlademittels auftretende Zug- und Schubkräfte übertragen.

Um das Verlademittel in der Laderichtung hin- und herzubewegen, ist bei einem erfindungsgemäßen Ladewagen gemäß einer weiteren Ausführungsform vorgesehen, dass das Verlademittel mindestens eine Antriebsausnehmung zur Aufnahme eines Gegenstücks aufweist, das von einem Verlademittelantrieb in Laderichtung antreibbar ist. Das Gegenstück wird in die Antriebsausnehmung des Verlademittels eingeführt, so dass durch die hierbei entstandene Kopplung von Gegenstück und Verlademittel ein Antrieb des Verlademittels über den Verlademittelantrieb erfolgt.

Das Einführen des Gegenstücks in die Antriebsausnehmung und entsprechend das Herausziehen wird üblicherweise durch ein Linearstellglied wie z.B. einen Elektromagneten bewirkt.

Der Verlademittelantrieb kann beispielsweise als Kettenantrieb ausgebildet sein. Es ist aber auch möglich, einen Linearantrieb wie z.B. einen Langhubzylinder oder dergleichen vorzusehen. Ferner ist eine Kupplung bzw. ein sonstiges Mittel zur Begrenzung der im Verlademittelantrieb auftretenden Zug- bzw. Antriebskräfte zweckmäßig, um bei einem mechanisch blockierten Verlademittel die Zerstörung der Antriebskomponenten durch überschreiten einer maximal zulässigen Antriebskraft und eine damit einhergehende Gefährdung der Umgebung zu vermeiden.

Mehrere Antriebsausnehmungen sind sehr zweckmäßig zur Beschleunigung eines Verladeprozesses, da ein noch nicht in eine Antriebsausnehmung eingeführtes bzw. sich noch nicht einer Antriebsausnehmung gegenüber befindliches Gegenstück im Mittel eine geringere Wegstrecke zurücklegen muss, um eine Antriebsausnehmung anzufahren.

Eine besonders vorteilhafte Ausführungsform der Erfindung ist dadurch gekennzeichnet, dass das Verlademittel zwei Antriebsausnehmungen aufweist, und dass die Antriebsausnehmungen jeweils in gegenüberliegenden Endbereichen des Verlademittels angeordnet sind.

Hierdurch ist es möglich, dass das Verlademittel durch den Verlademittelantrieb fast um seine gesamte Länge von der Rollfläche des Ladewagens auf eine Ladefläche oder in einen Waggon oder dergleichen verfahren wird, ohne dass das Gegenstück zwischenzeitlich in eine andere Antriebsausnehmung eingeführt werden muss. Ein beidseitiges Verfahren des Verlademittels von der Rollfläche des Ladewagens ist durch die beiden Antriebsausnehmungen ebenfalls gewährleistet.

Alternativ zu dem vorstehend beschriebenen Verlademittelantrieb mittels Antriebsausnehmung im Verlademittel und entsprechendem, angetriebenem Gegenstück ist gemäß einer weiteren Ausführungsform der Erfindung vorgesehen, dass das Verlademittel selbst Antriebsmittel, vorzugsweise Elektromotoren, zum Antrieb in Laderichtung aufweist.

Bei dieser Variante der Erfindung ist es beispielsweise möglich, in jedem oder auch nur in manchen/einem Segment/en des Verlademittels einen Elektromotor vorzusehen, der direkt oder über ein Getriebe die Rollen des Verlademittels antreibt.

Analog hierzu ist auch ein Kettenantrieb des Verlademittels denkbar, bei dem die Antriebsmittel ebenfalls direkt im Verlademittel integriert sind.

Eine andere Ausführungsform des erfindungsgemäßen Ladewagens ist dadurch gekennzeichnet, dass das Verlademittel mindestens eine Arretierungsausnehmung aufweist, mit der das Verlademittel unter Zusammenwirken mit einem am Ladewagen vorgesehenen Arretierungsgegenstück gegen Bewegungen in Laderichtung arretierbar ist.

Die erfindungsgemäße Arretierung des Verlademittels verhindert ein versehentliches Verfahren des Verlademittels und kann beispielsweise immer dann zur Sicherung des Verlademittels eingesetzt werden, wenn das Gegenstück des Verlademittelantriebs z.B. zwecks Wechsel der Antriebsausnehmung aus der momentan benutzten Antriebsausnehmung herausgezogen wird.

Eine weitere Steigerung der Flexibilität des erfindungsgemäßen Ladewagens ergibt sich dadurch, dass eine Fördervorrichtung auf dem Ladewagen vorgesehen ist, auf der die Ladung bei abgesenkter Tragfläche aufliegt, und dass die Ladung mittels der Fördervorrichtung in Laderichtung relativ zu dem Verlademittel hin- und herbewegbar ist.

Die Ladung kann hierbei durch Absenken der Tragflächen des Verlademittels auf der Fördervorrichtung abgestellt und mittels dieser relativ zum Verlademittel bewegt werden.

Hierdurch ist es möglich, den erfindungsgemäßen Verladewagen von einer ersten Seite zu beladen und von der in Laderichtung der ersten Seite gegenüberliegenden Seite zu entladen.

Da das Verlademittel zumindest bei Einsatz eines in dem Ladewagen integrierten Verlademittelantriebs unter Verwendung des oben erwähnten Gegenstücks und der damit zusammenwirkenden Antriebsausnehmungen nie ganz, d.h. mit der vollen Länge des Verlademittels, aus dem Ladewagen bzw. von dessen Rollfläche weg herausfahrbar ist und darüber hinaus stets ein geringer Abstand zwischen der Bereitstellungszone bzw. der Zielzone und der Rollfläche verbleibt, kann das Verlademittel vor dem Anheben der Ladung üblicherweise nicht so weit unter die Ladung fahren, dass sich diese in Laderichtung mittig über dem Verlademittel befindet. Die Ladung befindet sich vielmehr um einen gewissen Abstand in Richtung der Beladeseite des Ladewagens entfernt von der Mitte des Verlademittels positioniert.

Beim Entladen auf der gegenüberliegenden Entladeseite kann eine derartig plazierte Ladung nicht mittig in der Zielzone abgeladen werden, da zu der vorstehend genannten nicht mittigen Positionierung beim Entladen noch die Tatsache hinzutritt, dass das Verlademittel auch in Entladerichtung nicht ganz aus dem Ladewagen bzw. von dessen Rollfläche weg herausfahrbar ist.

Zur Abhilfe wird die nicht mittig auf dem Verlademittel plazierte Ladung durch Absenken der Tragfläche auf der Fördervorrichtung abgesetzt und von dieser relativ zur Tragfläche so weit versetzt, bis die Ladung mittig zum Verlademittel ausgerichtet ist oder sich sogar mehr auf der entladeseitigen Hälfte des Verlademittels befindet, um beim Entladen mittig in der Zielzone positioniert werden zu können.

Bei einem mit eigenen Antriebsmitteln versehenen Verlademittel kann diese Korrektur der Position der Ladung auf dem Verlademittel entfallen, da das Verlademittel weiter aus dem Ladewagen heraus bzw. von diesem weg verfahrbar ist. Gleichwohl ist die Möglichkeit einer Korrektur der Ladungsposition durch die Fördervorrichtung gegeben.

Eine besonders zweckmäßige Ausführungsform der Erfindung sieht vor, dass die Fördervorrichtung als Kettenförderer ausgebildet ist, wodurch eine Vielzahl verschiedener Ladungen ohne weitere Anpassung an die Fördervorrichtung bewegt werden kann.

Eine ganz besonders vorteilhafte Ausführungsform der vorliegenden Erfindung sieht vor, dass das Verlademittel höhenverstellbar ist, was eine Anpassung des Ladewagens an die verschiedensten Be- und Entladehöhen in der Bereitstellungszone und in der Zielzone ermöglicht.

Beim Verladen von Ladung in bzw. aus Bahnwaggongs ist die Höhenverstellbarkeit besonders vorteilhaft, da viele verschiedene Waggontypen existieren, deren Ladehöhe u.a. auch je nach Beladung sowie nach Waggonboden-Typ variiert.

Eine weitere Variante der Erfindung ist dadurch gekennzeichnet, dass zwei oder mehr Verlademittel vorgesehen sind, und dass die Verlademittel jeweils einzeln höhenverstellbar sind. Vorzugsweise sind die Verlademittel in Bezug auf die Laderichtung nebeneinander angebracht, so dass beide Verlademittel gleichzeitig unter die Ladung verfahrbar sind bzw. die Ladung anheben können.

Neben der größeren möglichen Hubkraft ergibt sich hierdurch eine stabilere Anordnung der Ladung auf den Verlademittein.

Da jedes Verlademittel einzeln höhenverstellbar ist, kann der Ladewagen bzw. die Verlademittel sogar an in Fahrtrichtung, d.h. quer zur Laderichtung, geneigte Ladeflächen angepasst werden, wodurch mechanische Beanspruchungen der Ladung beim Verfahren der Verlademittel von der Ladefläche auf die Rollfläche reduziert werden.

Insbesondere sind die Verlademittel durch die individuelle Höhenverstellung optimal an die Ladeflächen von Eisenbahnwaggons anpassbar, die aufgrund von in Fahrtrichtung unterschiedlich verteilter Ladung einen geneigten Waggonboden aufweisen können.

Die Höhenverstellung der Verlademittel erfolgt bei einer Ausführungsform der Erfindung vorteilhaft mit Spindelhubgetrieben.

Um eine automatische Erkennung der Höhe des Verlademittels oder eines Höhenunterschieds zwischen dem Verlademittel und einer Referenzebene zu ermöglichen, weist eine ebenfalls sehr vorteilhafte Ausführungsform der Erfindung vorzugsweise jeweils im Bereich der Verlademittel Mittel zur Erkennung der Höhe der Verlademittel und/oder Mittel zur Erkennung eines Höhenunterschieds zwischen dem Verlademittel und einer Referenzebene auf, insbesondere Kantentaster mit Reflexlichtschranken oder dergleichen.

Eine andere vorteilhafte Ausführungsform des erfindungsgemäßen Ladewagens ist dadurch gekennzeichnet, dass der Ladewagen einen Elektroantrieb zur Hin- und Herbewegung in der Fahrtrichtung aufweist. Speziell für einen halbautomatischen oder vollautomatischen Betrieb bietet es sich an, dass sich der Ladewagen auf Schienen eines Ladegleises bewegt. Eine weitere Variante der Erfindung sieht vor, dass der Ladewagen Strom aus einer längs der Fahrtrichtung bzw. des Ladegleises angeordneten Oberleitung entnimmt.

Bei einem automatischen Verladebetrieb ermittelt der Ladewagen seine Position durch an Rädern des Ladewagens angebrachte Drehgeber und/oder durch Bildverarbeitungssysteme, die entlang der Fahrtrichtung angebrachte Muster erkennen.

Durch die Bildverarbeitungssysteme ist auch eine relative Positionsermittlung, z.B. zwischen dem sich auf einem Ladegleis befindenden Ladewagen und einem auf einem daneben befindlichen Bahngleis stehenden Güterzug mit Waggons möglich. Beispielsweise ist jeder Waggon des Güterzugs mit mehreren Symbolen versehen, anhand derer die Bildverarbeitung des Ladewagens die jeweilige Position des Ladewagens relativ zu dem Waggon ermitteln kann.

Als eine weitere Lösung der Aufgabe der vorliegenden Erfindung ist bei einem Verladesystem der eingangs genannten Art der Einsatz eines Ladewagens nach einem der Ansprüche 1 bis 19 vorgeschlagen.

Eine ganz besonders vorteilhafte Ausführungsform des erfindungsgemäßen Verladesystems ist dadurch gekennzeichnet, dass mindestens ein modularer Ladebock zur Aufnahme mindestens eines Ladung aufnehmenden Ladungsträgers vorgesehen ist. Aufgrund seiner Modularität kann der Ladebock mit gleichartigen oder ähnlichen Elementen beliebig aneinandergereiht werden. Der Ladebock steht auf dem Boden der Bereitstellungszone und weist an seinen Füßen Nivellierschrauben auf, um ggf. in der Bereitstellungszone vorhandene Bodenunebenheiten ausgleichen zu können.

Gemäß einer weiteren Ausführungsform der vorliegenden Erfindung weist der Ladebock Tragbereiche auf, auf denen der Ladungsträger aufliegen kann. Um den Ladungsträger zu stabilisieren und eine genaue Positionierung des Ladungsträgers auf dem Ladebock zu ermöglichen, weist eine weitere Variante des Ladebocks in den Tragbereichen Zentriermittel auf, die den aufliegenden Ladungsträger auch gegen Verrutschen sichern.

Während der Ladebock selbst vorzugsweise eine Stahlkonstruktion aufweist sind die Zentriermittel vorzugsweise aus Hartkunststoff.

Eine weitere, sehr vorteilhafte Variante der Erfindung sieht vor, dass der Ladebock Rollflächen aufweist, auf denen ein Verlademittel des Ladewagens unter der Stützfläche eines aufgebockten Ladungsträgers verfahrbar ist. Dies ermöglicht einem neben dem Ladebock befindlichen Ladewagen, die Verlademittel unter die auf dem Ladebock befindliche Ladung bzw. den Ladungsträger zu bewegen und diese(n) anzuheben. Beim Verfahren unter den aufgebockten Ladungsträger stützen sich die Verlademittel des Ladewagens in bekannter Weise auf den Rollflächen des Ladebocks ab.

In einer weiteren Ausführungsform der Erfindung sind an dem Ladebock zusätzlich zu den Rollflächen auch Laufflächen für ein Nachschubsystem vorgesehen, das auf den Laufflächen des Ladebocks unter der Ladung bzw. dem Ladungsträger hinweg und vorzugsweise in Laderichtung verfahrbar ist und die Ladung bzw. den Ladungsträger bei Bedarf anheben und relativ zu dem Ladebock bewegen kann.

Eine andere Weiterbildung des erfindungsgemäßen Verladesystems ist dadurch gekennzeichnet, dass die Bereitstellungszone mindestens einen Puffer zur Zwischenlagerung von zu verladender Ladung aufweist. In den Puffern können auch leere oder Ladung enthaltende Ladungsträger zwischengelagert werden.

Ganz besonders vorteilhaft ist die Verwendung stapel- und klappbarer Ladungsträger, wobei auch bei Beaufschlagung mit Ladung mindestens zwei Ladungsträger übereinander stapelbar sind. Im leeren Zustand sind die Ladungsträger zur Reduktion des Raumbedarfs vorzugsweise zusammenklappbar, wobei mehrere der zusammengeklappten Ladungsträger übereinander stapelbar sind. Auch die gestapelten Ladungsträger sind auf einem Ladebock aufbockbar.

Gemäß einer weiteren vorteilhaften Ausgestaltung der Erfindung erstreckt sich die Bereitstellungszone entlang der Fahrtrichtung. Sind mehrere entlang der Fahrtrichtung oder den Gleisen des Ladewagens angeordnete Puffer in der Bereitstellungszone vorgesehen, so kann der Ladewagen durch Anfahren der verschiedenen Puffer auf die unterschiedlichen Ladungsträger zugreifen. Darüber hinaus ist die Pufferkapazität des Verladesystems gesteigert.

Eine sehr wirtschaftliche Konfiguration der Puffer ergibt sich bei einer weiteren Ausführungsform der Erfindung, bei der im Bezug auf die Fahrtrichtung mehrere Puffer nebeneinander und/oder hintereinander angeordnet sind.

Sind beispielsweise zwei Puffer, die ihrerseits jeweils mehrere Ladeböcke aufweisen, in Fahrtrichtung nebeneinander angeordnet, so kann das Nachschubsystem vom ersten bis zu dem zweiten Puffer hin- und her verfahren iwerden, da die an den jeweiligen Ladeböcken vorgesehenen Laufflächen für das Nachschubsystem sowohl zwischen den Ladeböcker; eines Puffers als auch zwischen Ladeböcken benachbarter Puffer direkt aneinandergrenzen. Auf diese Weise ist auch das Verbringen eines Ladungsträgers aus einem nicht direkt an das Ladegleis grenzenden Puffer in einen Puffer möglich, der direkt am Ladegleis liegt und daher von dem Ladewagen unter Verwendung der Verlademittel entladen werden kann. Ein leerer Puffer wird mit dem Nachschubsystem erneut mit Ladung oder mit zusammengeklappten leeren und/oder gestapelten Ladungsträgern gefüllt.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1a: zeigt eine Ausführungsform des erfindungsgemäßen Verladesystems in Draufsicht,
- Figur 1b: zeigt eine zweite Ausführungsform des erfindungsgemäßen Verladesystems,
- Figur 1c: zeigt eine Ausführungsform eines erfindungsgemäßen Ladebocks 21 mit aufgebockter Ladung,
- Figur 1d: zeigt einen Puffer 27a von oben,
- Figur 1e: zeigt eine Seitenansicht des Nachschubsystems mit Blick in Fahrtrichtung,
- Figur 2a: zeigt schematisch eine stark vereinfachte Seitenansicht einer Ausführungsform des erfindungsgemäßen Ladewagens 1 mit angehobenem Ladungsträger 2b,
- Figur 2b: zeigt teilweise im Querschnitt eine Detailansicht des rechten Teils des Ladewagens 1 aus Figur 2a mit Blick in Laderichtung,
- Figur 2c: zeigt teilweise im Querschnitt eine Detailansicht des linken Teils des Ladewagens 1 aus Figur 2a mit Blick in Fahrtrichtung,
- Figur 3a: zeigt schematisch eine Seitenansicht einer Ausführungsform des Verlademittels 6,
- Figur 3b: zeigt teilweise im Querschnitt eine Detailansicht eines Teils des Verlademittels 6 aus Figur 3a,
- Figur 3c: zeigt teilweise im Querschnitt eine Detailansicht des Verlademittels 6 aus Figur 3a in Draufsicht,
- Figur 3d: zeigt einen teilweisen Querschnitt durch das Verlademittel 6 mit abgesenkter Tragfläche 7a an einer ersten Stelle,
- Figur 3e: zeigt einen teilweisen Querschnitt durch das Verlademittel 6 mit angehobener Tragfläche 7a an einer zweiten Stelle, und
- Fig. 4a-f: zeigen sechs Phasen eines Verladevorgangs von einem Eisenbahnwaggon auf eine Laderampe.

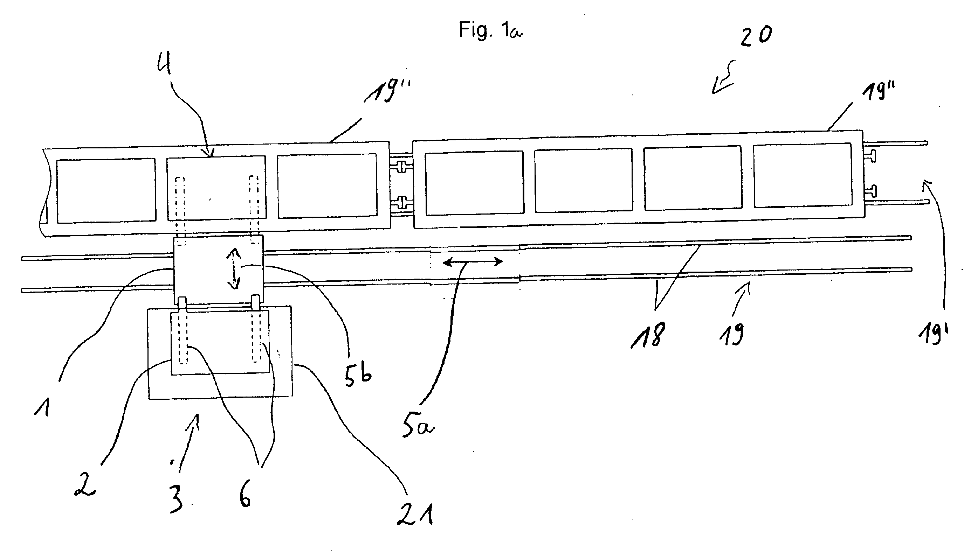

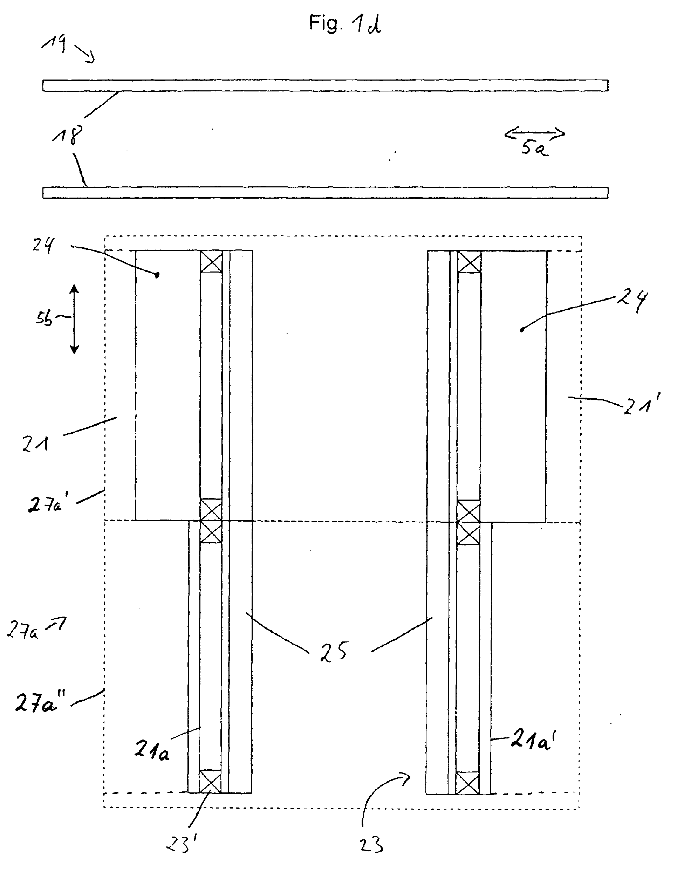

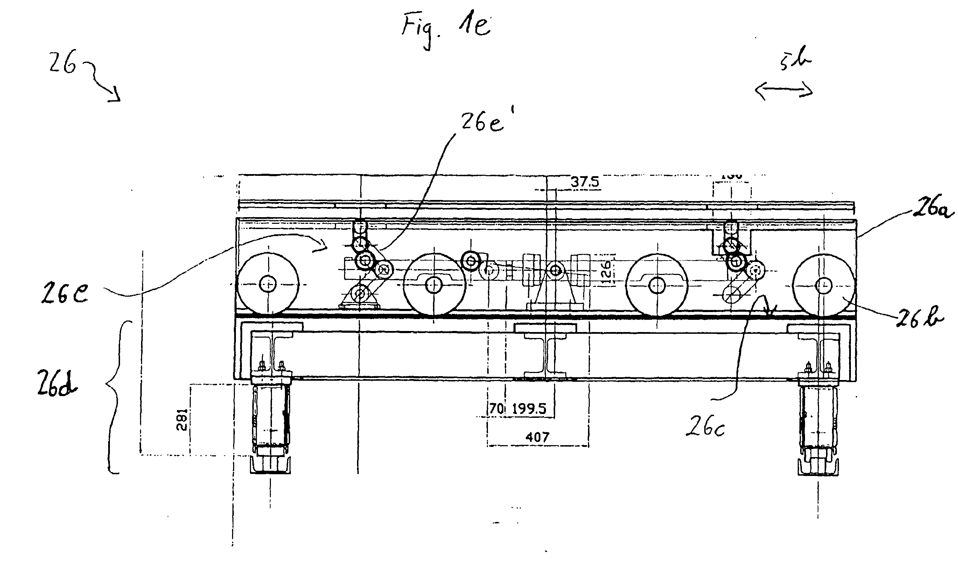

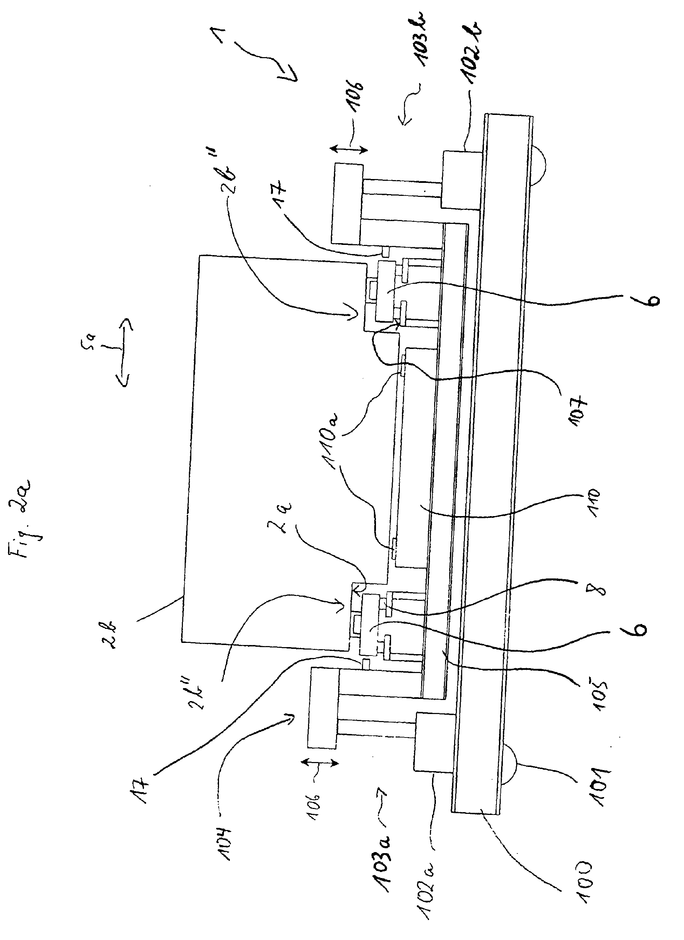

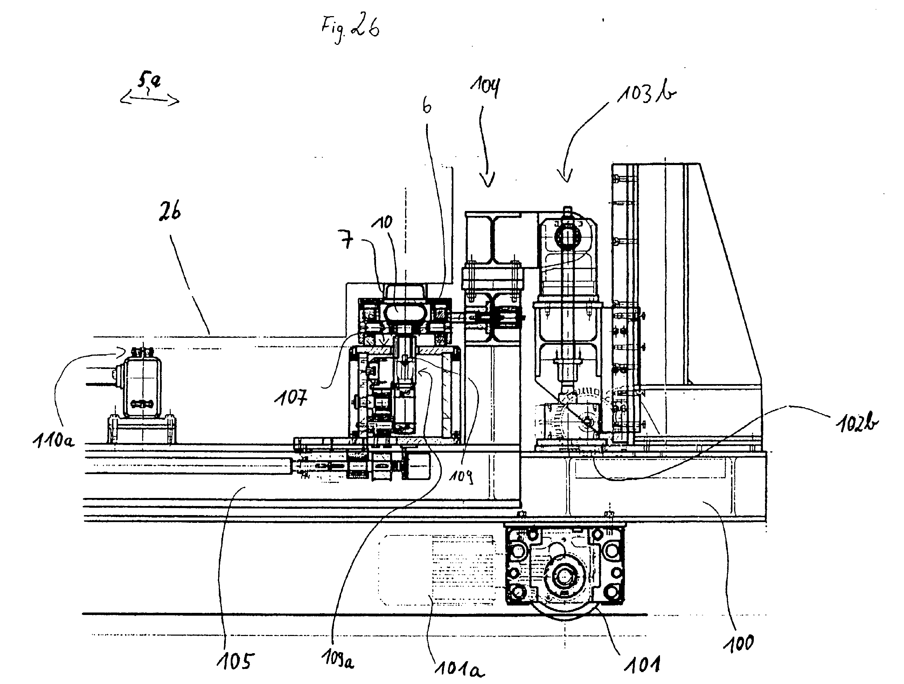

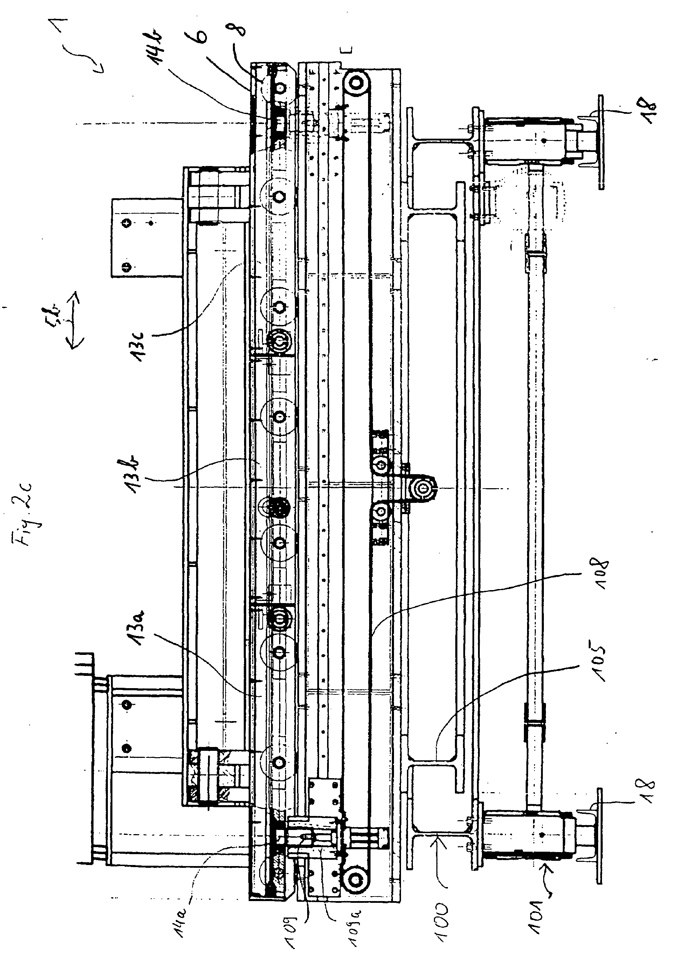

Das in Figur 1a abgebildete Verladesystem 20 weist einen Ladewagen 1 auf, der sich entlang einer durch den Doppelpfeil 5a angezeigten Fahrtrichtung auf dem Ladegleis 19 hin- und herbewegen kann. Das Ladegleis 19 ist durch die Schienen 18 gebildet.

Parallel zu dem Ladegleis 19 verläuft ein Bahngleis 19', auf dem Güterwaggons 19'' fahren können.

Der Ladewagen 1 verlädt in der Bereitstellungszone 3 bereitgehaltene Ladung 2 mittels in einer Laderichtung 5b hin- und herverfahrbarer Verlademittel 6 auf eine noch zu erläuternde Art und Weise in die Zielzone 4. Vorliegend ist die Zielzone 4 durch einen Güterwaggon 19'' gebildet, der auf dem Bahngleis 19' steht.

Figur 2a zeigt den Ladewagen 1 stark vereinfacht in einer Seitenansicht zusammen mit einem aufgeladenen Ladungsträger 2b, der eine beliebige Art von Ladung 2, beispielsweise Maschinenteile oder Kfz-Karcssen, aufnehmen kann. Die Laderichtung 5b, vgl. Fig. 1a, steht in der Figur 2a senkrecht auf der Zeichenebene und die Fahrtrichtung des Ladewagens 1 ist wiederum durch den Doppelpfeil 5a angezeigt.

Wie aus Figur 2a ersichtlich, weist der Ladewagen 1 einen Grundrahmen 100 auf, an dem Räder 101 und die Räder 101 antreibende Elektromotoren 101a (nicht in Fig. 2a gezeigt, vgl. Fig. 2b) angebracht sind.

Auf dem Grundrahmen 100 des Ladewagens 1 befinden sich zwei Spindelantriebe 102a, 102b, die jeweils Teil eines Spindelhubgetriebes 103a bzw. 103b sind. Die Spindelhubgetriebe 103a, b tragen einen über Winkelträger 104 gehaltenen Laderahmen 105, dessen Höhe relativ zu dem Grundrahmen 100 über die Spindelhubgetriebe 103a, b verstellbar ist. Auf diese Weise kann der Laderahmen 105 stufenlos und mit hoher Genauigkeit in eine bestimmte Höhe über dem Boden bewegt werden. Diese Höhenverstellbarkeit des Laderahmens 105 ist in Figur 2a durch die Doppelpfeile 106 angedeutet.

Besonders vorteilhaft ist die Tatsache, dass jedes Spindelhubgetriebe 103a, b einzeln verstellbar ist, so dass der Laderahmen 105 auch aus seiner Parallellage zum Grundrahmen 100 herausbewegt und damit gegenüber dem Boden in Fahrtrichtung 5a geneigt werden kann.

Auf dem Laderahmen 105 des Ladewagens 1 sind zwei auch als Skates bezeichnete Verlademittel 6 vorgesehen, die mit Rollen 8 auf dafür vorgesehenen Rollflächen 107 des Ladewagens 1 in Laderichtung, d.h. senkrecht zur Zeichenebene der Figur 2a verfahrbar sind.

Wie in Figur 1a durch die gestrichelten bzw. strichpunktierten Linien angedeutet, können die Skates 6 zu beiden Seiten des Ladewagens 1 entlang der Laderichtung 5b aus dem Ladewagen 1 heraus- und hineingefahren werden. Damit ist es möglich, den Ladewagen 1 auf einer Seite des Ladegleises 19 zu beladen und den Ladewagen 1 auf der anderen Ladegleisseite zu entladen oder umgekehrt.

Der Antrieb eines Skates 6 ist nachfolgend an der in Figur 2c gezeigten Detailansicht beschrieben, die einen teilweisen Querschnitt des Ladewagens 1 mit Blick auf das in Fig. 2a auf der linken Seite abgebildete Skate 6 zeigt.

Das Skate 6 wird durch eine fest im Ladewagen 1 integrierte Antriebsvorrichtung angetrieben, die einen parallel zum Skate 6 verlaufenden Zahnriemen 108 aufweist, an dem ein Gegenstück 109 zusammen mit einem Stellglied 109a befestigt ist. Das Gegenstück 109 kann durch das Stellglied 109a in einer in Figur 2c vertikalen Richtung hin- und herbewegt werden, so dass das Gegenstück 109 von unten in eine der beiden Antriebsausnehmungen 14a, b des Skates 6 einführbar bzw. aus dieser herausziehbar ist.

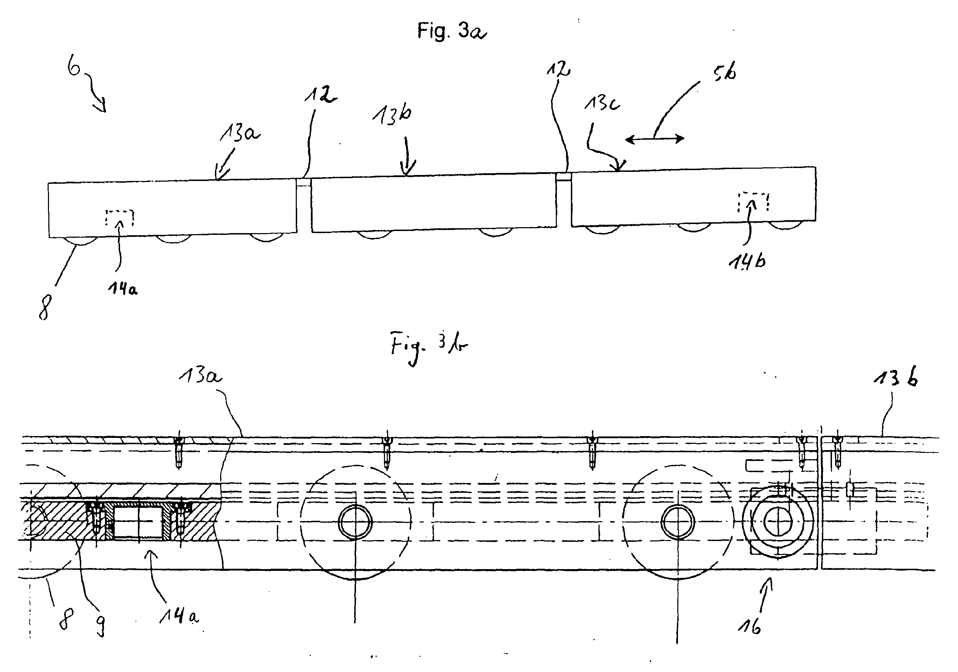

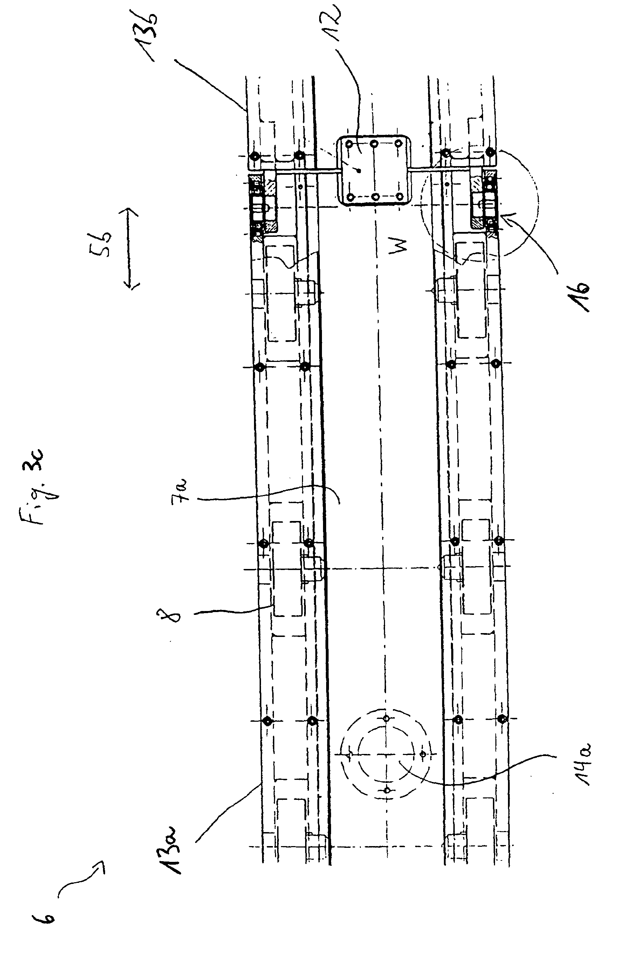

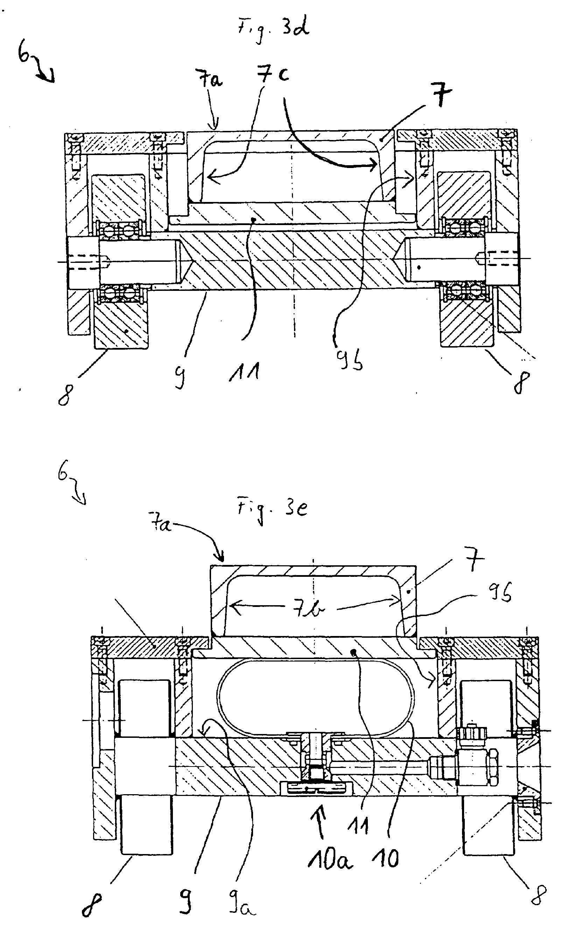

Die auf der Unterseite des Skates 6 befindlichen Antriebsausnehmungen 14a, b sind auch in der in Figur 3a gezeigten schematischen Seitenansicht des Skates 6 zu erkennen. Die Antriebsausnehmungen 14a, 14b auf, befinden sich jeweils an gegenüberliegenden Enden des Skates 6.

Aus dem teilweisen Querschnitt der Figur 3b ist ersichtlich, dass die Antriebsausnehmung 14a, ebenso wie die Antriebsausnehmung 14b (nicht in Fig. 3b gezeigt) sich direkt in einem Träger 9 des Skates befindet, der auf den Rollen 8 des Skates 6 gelagert ist, wodurch eine zuverlässige Einleitung der Antriebskraft des Zahnriemens 108 (Fig. 2c) durch das Gegenstück 109 in den Träger 9 gewährleistet ist. Die Antriebsausnehmung 14a ist auch der Draufsicht aus Fig. 3c zu entnehmen.

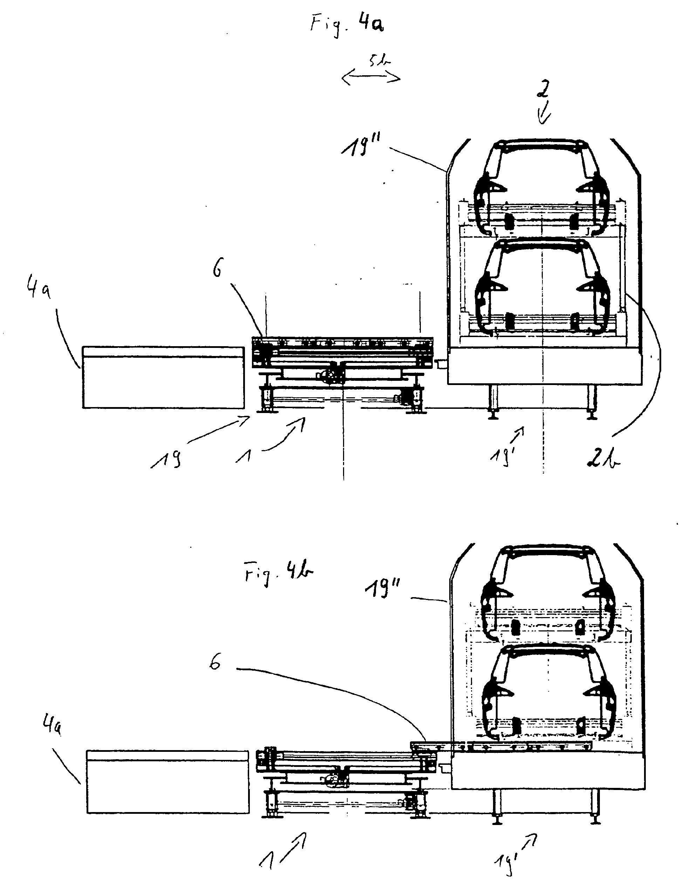

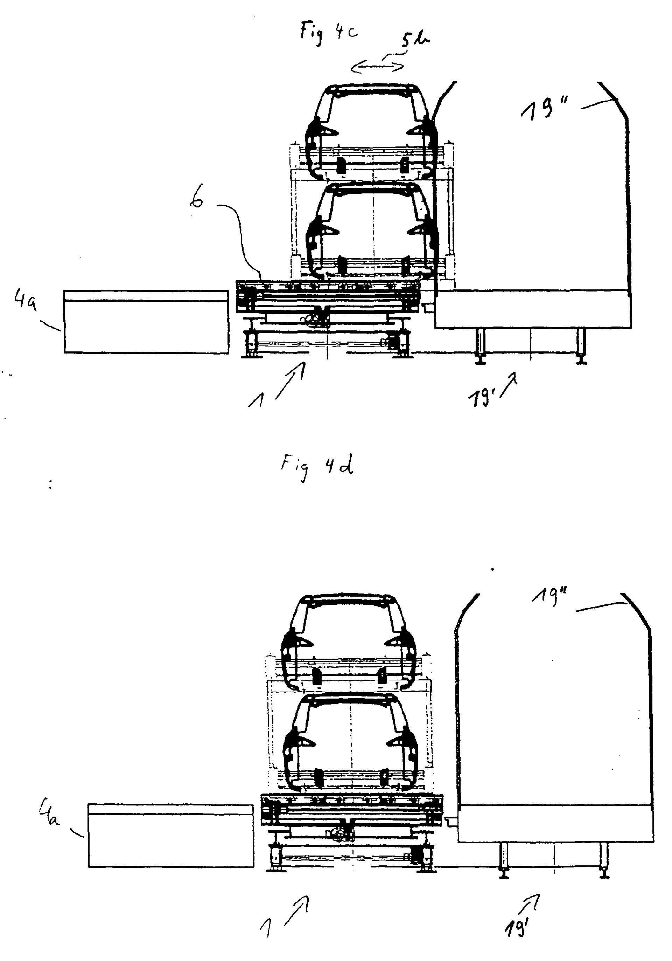

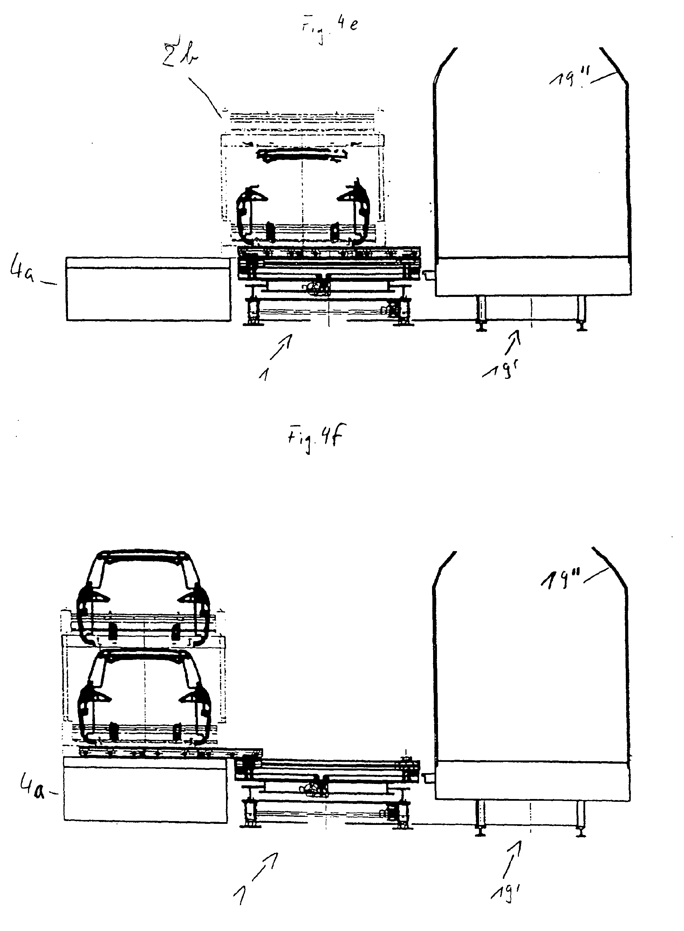

Die Figuren 4a bis 4f zeigen sechs Phasen eines typischen Verladevorgangs von einem auf dem Bahngleis 19' stehenden Eisenbahnwaggon 19" auf eine Laderampe 4a unter Einsatz des Ladewagens 1.

Zunächst befindet sich die in einem Ladungsträger 2b untergebrachte Ladung 2 in dem Eisenbahnwaggon 19'', vgl. Fig. 4a.

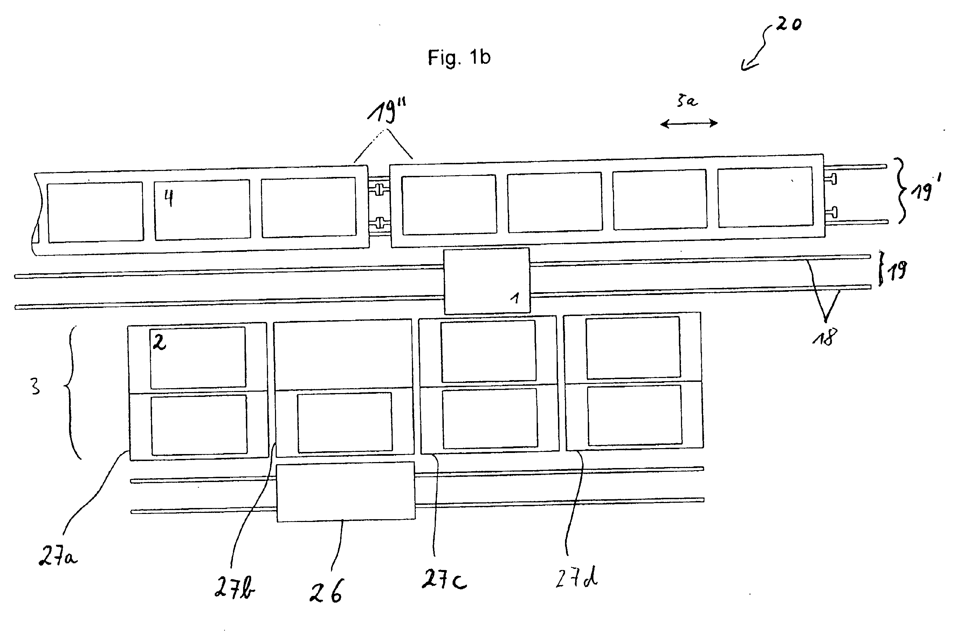

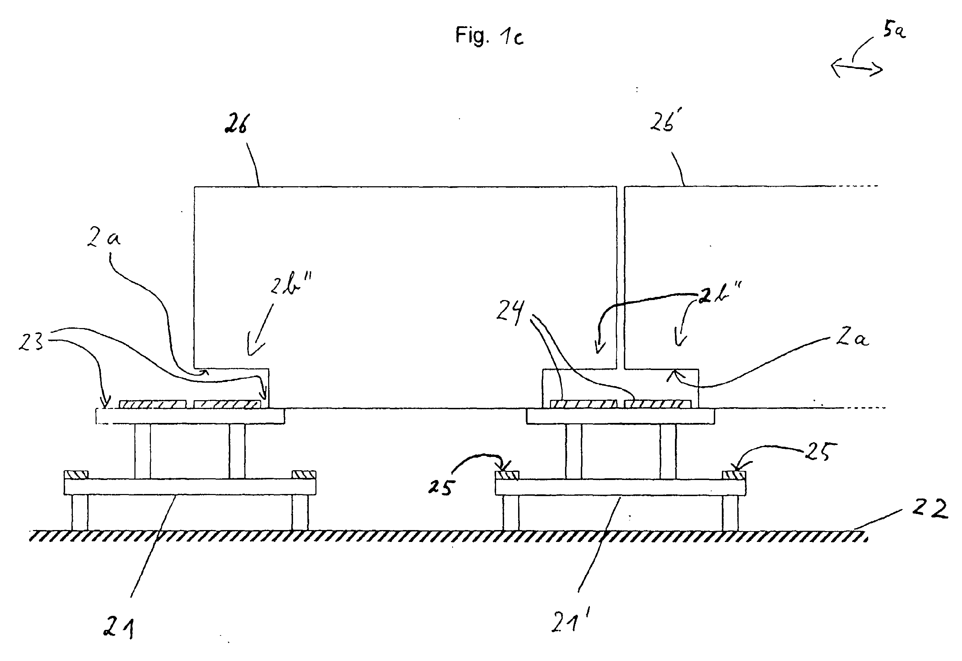

Der Ladewagen 1 bewegt sich entlang der Fahrtrichtung 5a (vgl. Fig. 1), die in Figur 4a senkrecht auf der Zeichenebene steht, auf dem Ladegleis 19 zur Ladung 2, wobei der Ladewagen 1 seine Position relativ zur Ladung 2 bzw. zu dem Waggon 19'' durch auf der Ladung 2 und/oder auf dem Waggon 19'' aufgebrachte Symbole ermittelt, die mit einem nicht gezeigten Bildverarbeitungssystem ausgewertet werden. Die Symbole sind mit zweidimensionalen Barcodes zur Kennzeichnung von Produkten vergleichbar und können zusätzlich auch Informationen über den Waggon 19'' bzw. die Ladung 2 enthalten.

Nachdem der Ladewagen 1 sich in Fahrtrichtung 5a genau vor der Ladung 2 positioniert hat, wird die Höhe des Laderahmens 105 (Fig. 2a) und damit auch die Höhe der Rollflächen 107 des Ladewagens 1 mit den Spindelhubgetrieben 103a, b so eingestellt, dass die Rollflächen 107 auf gleicher Höhe mit dem Waggonboden des Waggons 19'' liegen.

Die Erkennung der Höhe des Waggonbodens erfolgt mit als Kantentastern ausgebildeten laserbasierten Reflexlichtschranken oder dergleichen.

Sobald sich der Waggonboden und die Rollflächen 107 des Ladewagens 1 auf gleicher Höhe befinden, werden die Skates 6 des Ladewagens 1 auf den Waggonboden verfahren, auf dem sie sich - ebenso wie in eingefahrenem Zustand auf den Rollflächen 107 des Ladewagens 1 - abstützen. Dadurch muss der Ladewagen 1 kein von der Gewichtskraft der Ladung 2 herrührendes Drehmoment aufnehmen, was beispielsweise bei einem Gabelstapler der Fall ist.

Zum Verfahren eines Skates 6 vom Ladewagen 1 in den Waggon 19'' wird das durch den Zahnriemen 108 (Fig. 2c) angetriebene Gegenstück 109 in die waggonabgewandte, in Fig. 4a linke, Antriebsausnehmung 14a des Skates eingeführt und dann von dem Zahnriemen 108 mitgenommen, bis der Skate 6 maximal weit von dem Ladewagen 1 in den Waggon 19'' verfahren ist.

Dieser Zustand ist in Figur 4b gezeigt. Weiter kann das Skate 6 aufgrund des Zahnriemenantriebs durch das Gegenstück 109 (Fig. 2c) nicht herausgefahren werden. Bei einem Skate 6 mit eigenem Antrieb, bei dem die Rollen 8 z.B. direkt durch einen Elektromotor angetrieben werden, ist es durchaus denkbar, dass das Skate 6 ganz von dem Ladewagen 1 verfahrbar ist. Die Verfahrweite des Skates ist in diesem Fall nur von der Länge ggf. vorhandener Versorgungsleitungen abhängig.

Üblicherweise sind auch bei bereits stark abgenutzten, unebenen Waggonböden keine Hilfsmittel, z.B. zur Führung der Skates 6 beim Verfahren erforderlich; trotzdem kann zur Stabilisierung und zur Führung der Skates 6 beim Verfahren in den Waggon 19" bspw. ein gefalztes Blech auf dem Waggonboden befestigt werden.

Damit die Skates 6 unter die in dem Waggon 19'' befindliche Ladung 2 bzw. den sie aufnehmenden Ladungsträger 2b verfahren werden können, weist der Ladungsträger entsprechende Ausnehmungen 2b'' auf, vgl. Fig. 2a.

Sobald sich ein Skate 6 unter dem Ladungsträger 2b befindet, Fig. 4b, wird ein in dem Skate 6 befindlicher Schlauch 10 (Fig. 3e) über eine nicht gezeigte Druckluftversorgung des Ladewagens 1 aufgeblasen. Die Druckluftversorgung ist über den im Träger 9 befindlichen Druckluftanschluß 10a an den Schlauch 10 angeschlossen.

Bei der Beaufschlagung des Schlauchs 10 mit Druckluft vergrößert sich das vom Schlauch 10 eingenommene Volumen, und eine auf der Oberseite des Schlauchs 10 ruhende Zwischenplatte 11, die in den Seitenwänden 9b des Skates 6 geführt ist, wird nach oben gedrückt, wodurch das auf der Zwischenplatte 11 ruhende U-Profil 7 angehoben wird.

Die in Figur 3e nach oben zeigende Grundseite des U-Profils 7 bildet eine Tragfläche 7a, die beim Aufblasen des Schlauchs 10 von unten an eine im Bereich der Ausnehmungen 2b'', vgl. Fig. 2a, befindliche Stützfläche 2a des Ladungsträgers 2b gedrückt wird, wodurch der Ladungsträger 2b angehoben wird. In diesem Zustand lastet das Eigengewicht und das Gewicht des Ladungsträgers 2b (mit Ladung) auf dem Skate 6 bzw. den Skates 6.

Nach dem Anheben des Ladungsträgers 2b werden die Skates 6 wieder auf den Ladewagen 1 verfahren, was durch eine Bewegungsrichtungsumkehr des Zahnriemens 108, vgl. Figur 2c, erreicht wird. Nach dem Verfahren der Skates 6 auf den Ladewagen 1 ist der in Fig. 4c gezeigte Zustand erreicht, bei dem zu erkennen ist, dass die Ladung 2 in Laderichtung 5b nicht mittig auf den Skates 6 aufliegt.

Dies hat seinen Grund darin, dass die Skates 6 zuvor nicht ganz von dem Ladewagen 1 in den Güterwaggon 19'' verfahren werden konnten, um mittig unter der Ladung 2 positioniert zu werden.

Um die Lage der Ladung 2 auf den Skates 6 zu verändern, wird die Ladung 2 zunächst auf dem Ladewagen 1 abgesenkt, was dadurch erfolgt, dass der Schlauch 10 aus Fig. 3e über eine Entlüftungsvorrichtung entlüftet wird. Das Entlüften kann durch die auf den Schlauch 10 wirkende Gewichtskraft der Ladung 2 allein oder auch durch zusätzliches Evakuieren des Schlauchs 10 erfolgen, wobei eine schnellere Absenkung der Tragflächen 7a und der darauf ruhenden Ladung 2 erzielbar ist. Figur 3d zeigt einen Querschnitt durch das Skate 6 im entlüfteten Zustand.

Beim Absenken der Ladung 2 auf dem Ladewagen 1 kommt der Ladungsträger 2b auf Förderketten 110a eines in Figur 2a schematisch dargestellten Kettenförderers 110 zu liegen, der sich zwischen den beiden Skates 6 befindet. In der Detailansicht aus Figur 2b ist links eine Kette 110a des Kettenförderers 110 zu erkennen.

Die Tragflächen 7a der Skates 6 senken sich so weit ab, dass sie den Ladungsträger 2b nicht mehr berühren, so dass dieser nur noch von den Ketten 110a des Kettenförderers 110 getragen wird.

Der Kettenförderer 110 versetzt den Ladungsträger 2b entlang der Laderichtung 5b von der in Figur 4c gezeigten Lage auf den Skates 6 über die mittige Lage, die in Figur 4d gezeigt ist bis hin in die in Figur 4e gezeigte Lage, in der sich der Ladungsträger 2b links von der Mitte der Skates 6 befindet.

Dieser Linksversatz des Ladungsträgers 2b relativ zu den Skates 6 ist wegen des antriebsbedingt beidseitig begrenzten Verfahrwegs der Skates 6 erforderlich, damit der Ladungsträger 2b mittig auf der Laderampe 4a abgesetzt werden kann, vgl. die Ausführungen zu Fig. 4b, 4c.

Ausgehend von Figur 4e wird der noch auf dem Kettenförderer 110 ruhende Ladungsträger 2b durch Aufblasen der Schläuche 10 (Fig. 3e) der Skates 6 von den Tragflächen 7a angehoben und verliert damit den Kontakt zu den Ketten 110a (Fig. 2a, 2b) des Kettenförderers 110, woraufhin die Skates 6 mitsamt Ladung 2 gemäß Figur 4f nach links auf die Laderampe 4a verfahren werden können.

Zuvor muss jedoch das Gegenstück 109, Fig. 2c, aus der linken Antriebsausnehmung 14a entfernt und in die rechte Antriebsausnehmung 14b eingeführt werden, damit das Skate 6 nach links auf die Laderampe 4a verfahrbar ist.

Sobald der Ladungsträger 2b samt Ladung 2 vermöge der Skates 6 mittig auf die Laderampe 4a verfahren worden ist, werden die Schläuche 10 der Skates 6 entlüftet, um die Ladungsträger 2b abzusenken und die Skates 6 zurück auf den Ladewagen 1 verfahren zu können.

Zur Sicherung eines auf dem Ladewagen 1 befindlichen Skates 6 ist mindestens eine seitlich am Skate 6 angeordnete Arretierungsausnehmung 16 vorgesehen, vgl. Fig. 3b, Fig. 3c, in die ein am Winkelträger 104 des Ladewagens 1 angeordnetes, mittels Stellglied linearbewegliches Arretierungsgegenstück 17 (Fig. 2a) einführbar ist, um ein Verfahren bzw. Wegrollen des Skates 6 auf der Rollfläche 107 des Ladewagens 1 zu verhindern, während das zum Antrieb des Skates 6 gehörige Gegenstück 109 (Fig. 2c) nicht in Eingriff mit einer der Antriebsausnehmungen 14a, b des Skates 6 ist.

Bei einer Ausführungsform der Erfindung weist das Skate 6 wie in Figur 3a abgebildet, mehrere Segmente 13a, 13b, 13c auf, die untereinander durch Blattfedern 12 (vgl. auch Fig. 3c) aus Federstahl verbunden sind. Diese Ausführungsform hat den besonderen Vorteil, dass sich das Skate 6 unter elastischer Verformung der Blattfedern 12 beim Verladevorgang einer sich in Laderichtung 5b erstreckenden Bodenkrümmung anpassen kann. Dadurch kann der Ladewagen 1 Ladungen 2 auch von unebenen Böden verladen. Es ist denkbar, dass die zum Verfahren des Skates 6 erforderlichen, vom Zahnriemen 108 (Fig. 2c) über das Gegenstück 109 in den Träger 9 des Skates 6 eingeleiteten Zug- und Schubkräfte allein durch die Blattfedern 12 zwischen den Segmenten 13a, b, c übertragen werden. Zusätzlich oder alternativ zu den Blattfedern 12 ist auch eine Gelenkverbindung zur Kraftübertragung zwischen je zwei benachbarten Segmenten 13a, b, c des Skates 6 möglich.

Der vorstehend beschriebene Ladewagen 1 ist in einem Verladesystem nach Figur 1a, wie eingangs bereits erwähnt, dazu vorgesehen, die in der Bereitstellungszone 3 bereitgestellte Ladung 2, die sich üblicherweise in Ladungsträgern 2b befindet, aufzunehmen und in eine Zielzone 4 zu befördern.

Um den Verladevorgang möglichst effizient zu gestalten, sind gemäß einer in Figur 1b abgebildeten Ausführungsform des Verladesystems 20 mehrere Puffer 27a, 27b, 27c, 27d in der Bereitstellungszone 3 angeordnet, die vom Ladewagen 1 zu verladende Ladung 2 aufnehmen.

Die Darstellung in Figur 1d zeigt den Puffer 27a aus Figur 1b von oben in Vergrößerung, wobei die Ladung 2 in Figur 1d nicht abgebildet ist. Der Puffer 27a weist zwei Pufferplätze 27a' und 27a'' auf, die jeweils Stellplatz für in Figur 1c von der Seite dargestellte Ladeböcke 21 bieten.

Der Ladebock 21 besteht aus einem Oberteil, das Tragbereiche 23 sowie zwei dazwischen befindliche Rollflächen 24 aufweist, auf denen ein Skate 6 (nicht gezeigt) des Ladewagens 1 in Laderichtung, d.h. senkrecht zur Zeichenebene der Figur 1c, hin- und herverfahrbar ist. Darüber hinaus weist der Ladebock 21 ein mit Füßen versehenes Unterteil auf, wobei die Füße mit Nivellierschrauben zum Ausgleich von Unebenheiten des Bodens 22 ausgestattet sind.

Die Rollflächen 24 befinden sich im Bereich der Ausnehmungen 2b'' der aufgebockten Ladungsträger 2b, 2b', so dass die Skates 6 (Fig. 3d, 3e) mit abgesenkten Tragflächen 7a unter den Ladungsträger 2b bzw. 2b' verfahrbar sind und ihn in bereits beschriebener Weise anheben und abtransportieren können.

Wie aus Figur 1c ersichtlich ist der Ladebock 21' symmetrisch und so ausgebildet, dass beide Ladungsträger 2b und 2b' sich gleichzeitig auf dem Ladebock 21' abstützen können. Benachbarte Ladeböcke 21, . . . . tragen jeweils die anderen Seiten der Ladungsträger 2b, 2b'.

Zusätzlich zu den Rollflächen 24 weist der Ladebock 21 auch noch Laufflächen 25 auf, die gemäß Fig. 1c unterhalb der Rollflächen 24 und weiter innen bezogen auf die Ladungsträgermitte in Fahrtrichtung 5a verlaufen.

Auf den Laufflächen 25 der Ladeböcke 21 kann eine Transporteinheit 26a (Fig. 1e), die Teil eines in Fig. 1b und 1e gezeigten Nachschubsystems 26 ist, unterhalb der aufgebockten Ladungsträger 2b auf den Ladeböcken 21 verfahren werden.

Die Transporteinheit 26a ist ferner in Laderichtung 5b auf Rollen 26b auf einer Rollfläche 26c verfahrbar, die sich auf der Oberseite des schienengebundenen Teils 26d des Nachschubsystems 26 befindet.

Besonders vorteilhaft ist die in Fig. 1d gezeigte Anordnung der Ladeböcke 21, 21', 21a, 21a', die so neben- bzw. hintereinander aufgestellt sind, dass jeweils die Laufflächen 25 der rechten Hälfte des Ladebocks 21 und 21a bzw. die Laufflächen 25 der linken Hälfte des Ladebocks 21' und 21a' fluchten, so dass sich insgesamt ein Lauffläche 25 für die Transporteinheit 26a des Nachschubsystems 26, vgl. Fig. 1e, ergibt, die sich unter beiden Pufferplätzen 27a' und 27a" erstreckt.

Damit kann die Transporteinheit 26a von dem gleisgebundenen Teil 26d der Nachschubeinheit 26 herab zunächst auf den Ladeböcken 21a und 21a' unter dem ersten aufgebockten Ladungsträger (nicht gezeigt) bis auf die Ladeböcke 21 und 21' unter den zweiten aufgebockten Ladungsträger (nicht gezeigt), d.h. vom Pufferplatz 27a'' zum Pufferplatz 27a', und wieder zurück verfahren.

Die Transporteinheit 26a ist mit Hubmitteln 26e zum Anheben eines über ihr befindlichen Ladungsträgers 2b ausgestattet, so dass sie einen auf den Ladeböcken 21a, 21a', 21, 21' aufgebockten Ladungsträger 2b anheben, auf die Ladeböcke des benachbarten Pufferplatzes verfahren und darauf absetzen kann. Die Hubmittel weisen hierzu Kniehebelmechanismen 26e' auf.

Von den Ladeböcken 21, 21' kann der sich auf dem Ladegleis 19 bewegende Ladewagen 1 (vgl. Fig. 1a) einen dort aufgebockten Ladungsträger 2b mittels seiner Skates 6 direkt abtransportieren. Hierzu müssen die Skates 6 in bekannter Weise mit zunächst abgesenkten Tragflächen 7a (Fig. 3d) auf den Rollflächen 24 unter den im Pufferpiatz 27a' aufgebockten Ladungsträger 2b verfahren werden, um ihn anschließend anzuheben und auf den Ladewagen 1 zu verbringen.

Der Pufferplatz 27a'' ist von dem Ladegleis 19 aus für den Ladewagen 1 mit seinen Skates 6 nicht direkt erreichbar, so dass die in dem Pufferplatz 27a'' befindlichen Ladeböcke 21a, 21a' dementsprechend keine Rollfläche 24 für die Skates 6 benötigen.

Die Transporteinheit 26a des Nachschubsystems 26 verbringt bei dem Verladesystem 20 aus Figur 1b auf ladegleisabgewandten Pufferplätzen (z.B. 27a'' aus Figur 1d) befindliche Ladungsträger 2b zu den jeweilig benachbarten ladegleiszugewandten Pufferplätzen (z.B. 27a' aus Figur 1d), von wo der Ladewagen 1 den Ladungsträger 2b selbst mittels Skates 6 abholen und weiterverladen kann.

Ferner wird die Nachschubeinheit 26 an einer nicht gezeigten Stelle mit neuen zu verladenden Ladungsträgern 2b versehen, die mittels Transporteinheit 26a wie beschrieben in freie Pufferplätze entlang des Ladegleises 19 transportiert werden.

Auf diese Weise ist der Nachschub an Ladungsträgern 2b für den Ladewagen 1 stets gesichert, und eine effiziente Verladung z.B. von/zu Güterwaggons 19'' ist sichergestellt.

In einer weiteren Ausführungsform weisen die Ladeböcke 21 in ihren Tragbereichen 23 Zentriermittel 23' auf, die in dafür vorgesehene Aussparungen (nicht gezeigt) an den Ladungsträgern 2b eingreifen und einen Ladungsträger 2b im aufgebockten Zustand gegen Verrutschen/Hinabfallen zu sichern.

Wie bereits erwähnt, eignen sich die Ladungsträger 2b zur Aufnahme jeglicher Art von Ladung 2, so dass mit dem vorstehend angegebenen Verladesystem eine beliebige Ladung 2 wirtschaftlich und schonend verladen werden kann.

Besonders vorteilhaft ist die Energieversorgung des Ladewagens 1 durch eine längs des Ladegleises 19 verlaufende Oberleitung (nicht gezeigt). Der Ladewagen 1 weist vorteilhaft einen eigenen Kompressor zur Drucklufterzeugung auf.

## Patentansprüche

1. Ladewagen (1), insbesondere zum Verladen einer Ladung (2) von einer Bereitstellungszone (3) zu einer Zielzone (4), wobei der Ladewagen (1) entlang einer Fahrtrichtung (5a) hin- und her verfahrbar ist und mindestens ein in einer quer zur Fahrtrichtung (5a) liegenden Laderichtung (5b) aus- und einfahrbares Verlademittel (6) aufweist, und wobei das Verlademittel (6) eine anhebbare und absenkbare Tragfläche (7a) aufweist, mit der das Verlademittel (6) unter Stützflächen (2a) der Ladung (2) verfahrbar ist, **dadurch gekennzeichnet, dass** das Verlademittel (6) einen auf Rollen (8) gelagerten Träger (9) aufweist.

2. Ladewagen (1) nach Anspruch 1, **dadurch gekennzeichnet, dass** zwischen einer Oberseite (9a) des Trägers (9) und einem mit seiner Grundseite die Tragfläche (7a) bildenden, nach unten offenen U-Profil (7), ein druckluftbeaufschlagbarer Schlauch (10) zur Höhenverstellung der Tragfläche (7a) vorgesehen ist.

3. Ladewagen (1) nach Anspruch 2, **dadurch gekennzeichnet, dass** zwischen dem Schlauch (10) und dem U-Profil (7) eine in Seitenwänden (9b) des Trägers (9) geführte Zwischenplatte (11) vorgesehen ist, auf der vorzugsweise die Schenkel (7b) des U-Profils (7) ruhen.

4. Ladewagen (1) nach Anspruch 2 oder 3, **dadurch gekennzeichnet, dass**, vorzugsweise in dem Träger (9), ein Druckluftanschluß (10a) und/oder eine Entlüftungsvorrichtung zur Versorgung des Schlauchs (10) mit Druckluft bzw. zu dessen Entlüftung vorgesehen ist/sind.

5. Ladewagen (1) nach Anspruch 1, **dadurch gekennzeichnet, dass** das Verlademittel (6) elektromechanische und/oder pneumatische und/oder hydraulische Mittel zur Höhenverstellung der Tragfläche (7a) aufweist.

6. Ladewagen (1) nach einem der vorstehenden Ansprüche, **dadurch gekennzeichnet, dass** das Verlademittel (6) mindestens zwei entlang der Laderichtung (5b) mittels Federelementen (12) und/oder anderen mechanischen Verbindungen gelenkig miteinander verbundene Segmente (13a, 13b, 13c) aufweist.

7. Ladewagen (1) nach einem der vorstehenden Ansprüche, **dadurch gekennzeichnet, dass** das Verlademittel (6) mindestens eine Antriebsausnehmung (14a) zur Aufnahme eines Gegenstücks (109) aufweist, das von einem Verlademittelantrieb (108) in Laderichtung (5b) antreibbar ist.

8. Ladewagen (1) nach Anspruch 7, **dadurch gekennzeichnet, dass** das Verlademittel (6) zwei Antriebsausnehmungen (14a, 14b) aufweist, und dass die Antriebsausnehmungen (14a, 14b) jeweils in gegenüberliegenden Endbereichen des Verlademittels (6) angeordnet sind.

9. Ladewagen (1) nach einem der vorstehenden Ansprüche, **dadurch gekennzeichnet, dass** das Verlademittel (6) selbst Antriebsmittel, vorzugsweise Elektromotoren, zum Antrieb in Laderichtung (5b) aufweist.

10. Ladewagen (1) nach einem der vorstehenden Ansprüche, **dadurch gekennzeichnet, dass** das Verlademittel (6) mindestens eine Arretierungsausnehmung (16) aufweist, mit der das Verlademittel (6) unter Zusammenwirken mit einem am Ladewagen (1) vorgesehenen Arretierungsgegenstück (17) gegen Bewegungen in Laderichtung (5b) arretierbar ist.

11. Ladewagen (1) nach einem der vorstehenden Ansprüche, **dadurch gekennzeichnet, dass** eine Fördervorrichtung (110) auf dem Ladewagen (1) vorgesehen ist, auf der die Ladung (2) bei abgesenkter Tragfläche (7a) aufliegt, und dass die Ladung (2) mittels der Fördervorrichtung (110) in Laderichtung (5b) relativ zu dem Verlademittel (6) hin- und herbewegbar ist.

12. Ladewagen (1) nach Anspruch 11, **dadurch gekennzeichnet, dass** die Fördervorrichtung (110) als Kettenförderer ausgebildet ist.

13. Ladewagen (1) nach einem der vorstehenden Ansprüche, **dadurch gekennzeichnet, dass** das Verlademittel (6) höhenverstellbar ist.

14. Ladewagen (1) nach Anspruch 13, **dadurch gekennzeichnet, dass** zwei oder mehr Verlademittel (6) vorgesehen sind, und dass die Verlademittel (6) jeweils einzeln höhenverstellbar sind.

15. Ladewagen (1) nach Anspruch 13 oder 14, **dadurch gekennzeichnet, dass** zur Höhenverstellung der Verlademittel (6) Spindelhubgetriebe (103a, 103b) vorgesehen sind.

16. Ladewagen (1) nach einem der Ansprüche 13 bis 15, **dadurch gekennzeichnet, dass** der Ladewagen (1) vorzugsweise jeweils im Bereich der Verlademittel (6) Mittel zur Erkennung der Höhe der Verlademittel (6) und/oder Mittel zur Erkennung eines Höhenunterschieds zwischen dem Verlademittel (6) und einer Referenzebene aufweist, insbesondere Kantentaster mit Reflexlichtschranken oder dergleichen.

17. Ladewagen (1) nach einem der vorstehenden Ansprüche, **dadurch gekennzeichnet, dass** der Ladewagen (1) einen Elektroantrieb zur Hin- und Herbewegung in der Fahrtrichtung (5a) aufweist.

18. Ladewagen (1) nach einem der vorstehenden Ansprüche, **dadurch gekennzeichnet, dass** der Ladewagen (1) sich auf Schienen (18) eines Ladegleises (19) bewegt.

19. Ladewagen (1) nach einem der vorstehenden Ansprüche, **dadurch gekennzeichnet, dass** der Ladewagen (1) Strom aus einer längs der Fahrtrichtung (5a) bzw. des Ladegleises (19) angeordneten Oberleitung entnimmt.

20. Verladesystem (20) zum Verladen einer Ladung (2) von einer Bereitstellungszone (3) zu einer Zielzone (4) mit einem Ladewagen (1) nach einem der vorstehenden Ansprüche.

21. Verladesystem (20) nach Anspruch 20, **dadurch gekennzeichnet, dass** mindestens ein modularer Ladebock (21) zur Aufnahme mindestens eines Ladung (2) aufnehmenden Ladungsträgers (2b) vorgesehen ist.

22. Verladesystem (20) nach Anspruch 21, **dadurch gekennzeichnet, dass** der Ladebock (21) Tragbereiche (23) aufweist, auf denen der Ladungsträger (2b) aufliegen kann.

23. Verladesystem (20) nach Anspruch 22, **dadurch gekennzeichnet, dass** der Ladebock (21) in den Tragbereichen (23) Zentriermittel (23') aufweist, die einen aufliegenden Ladungsträger (2b) gegen Verrutschen sichern.

24. Verladesystem (20) nach Anspruch 22 oder 23, **dadurch gekennzeichnet, dass** der Ladebock (21) Rollflächen (24) aufweist, auf denen ein Verlademittel (6) des Ladewagens (1) unter der Stützfläche (2a) eines aufgebockten Ladungsträgers (2b) verfahrbar ist.

25. Verladesystem (20) nach einem der Ansprüche 22 bis 24, **dadurch gekennzeichnet, dass** der Ladebock (21) Laufflächen (25) für ein Nachschubsystem (26) aufweist.

26. Verladesystem (20) nach einem der Ansprüche 20 bis 25, **dadurch gekennzeichnet, dass** die Bereitstellungszone (3) mindestens einen Puffer (27a, 27b, ....) zur Zwischenlagerung von zu verladender Ladung (2) aufweist.

27. Verladesystem (20) nach einem der Ansprüche 20 bis 26, **dadurch gekennzeichnet, dass** die Bereitstellungszone (3) sich entlang der Fahrtrichtung (5a) erstreckt.

28. Verladesystem (20) nach einem der Ansprüche 26 bis 27, **dadurch gekennzeichnet, dass** im Bezug auf die Fahrtrichtung (5a) mehrere Puffer (27a, 27b, . . . .) nebeneinander und/oder hintereinander angeordnet sind.

29. Verladesystem (20) nach einem der Ansprüche 26 bis 28, **dadurch gekennzeichnet, dass** ein Nachschubsystem (26) die Puffer (27a, 27b, . . . .) mit Ladung (2) und/oder Ladungsträgern (2b) beschickt.
